# EUROPEAN PATENT APPLICATION

(11) **EP 4 787 557 A1**
(43) Date of publication of application: **05.08.2026**
(21) Application number: 24869883.9
(22) Date of filing: 21.06.2024
(51) Int. Cl.: H01M 50/103

(54) **BATTERY CASING STRUCTURE, BATTERY, AND ELECTRICAL DEVICE**

(30) Priority: 28.09.2023 CN 202322691995 U
(71) Applicant: BYD Company Limited, Shenzhen, Guangdong 518118 (CN)
(72) Inventor: LIANG, Liwei, Shenzhen, Guangdong 518118 (CN); MA, Chenchong, Shenzhen, Guangdong 518118 (CN); CAI, Chengyan, Shenzhen, Guangdong 518118 (CN); HU, Shumin, Shenzhen, Guangdong 518118 (CN); OUYANG, Jinzhong, Shenzhen, Guangdong 518118 (CN)
(74) Representative: Mathys & Squire
(86) International application number: PCT/CN2024/100718
(87) International publication number: WO 2025/066323

(57) **Abstract**

A battery housing structure (100), a battery (200), and an electric device (300) are provided. The battery housing (10) structure includes a housing bottom plate (11), side plates (12) that surround a periphery of the housing bottom plate (11), and a cover plate (13). The housing bottom plate (11) and the side plates (12) jointly define an accommodation cavity (121) provided with an opening, an area of the cover plate (13) is greater than an area of each side plate (12), and the cover plate is disposed at the opening and configured to close the opening. A surface of the cover plate (13) away from the accommodation cavity (121) is provided with a groove (14), and the groove (14) is provided with a through hole (141) communicating with the accommodation cavity (121). A terminal-pole (20) extends into the accommodation cavity (121) through the through hole (141). In a thickness direction of the cover plate (13), a height of the groove (14) is H1, a height of the terminal-pole (20) exposed from the bottom wall of the groove (14) in a direction away from the accommodation cavity (121) is H2, and a thickness of the housing (10) is H3, where H2 ≤ H1 ≤ 0.6 × H3, and H1, H2 and H3 are measured in a same unit.

## Description

This application claims priority to Chinese Patent Application No. 202322691995.8, filed with the China National Intellectual Property Administration on September 28, 2023, and entitled "BATTERY HOUSING STRUCTURE, BATTERY, AND ELECTRIC DEVICE", which is incorporated herein by reference in its entirety.

### TECHNICAL FIELD

This application relates to the field of new energy technologies, and in particular, to a battery housing structure, a battery, and an electric device.

### BACKGROUND

A battery includes a housing, a terminal-pole assembly, and a battery cell. The terminal-pole assembly includes a terminal-pole. In related technologies, the terminal-pole is mounted on a relatively small side surface of the housing, where layout space is limited. In addition, the terminal-pole usually protrudes from the side surface, which occupies space and is not conducive to assembly of the battery.

### SUMMARY

In view of the deficiencies of the prior art, an objective of this application is to provide a battery housing structure, a battery, and an electric device, to reduce difficulty in fastening of a terminal-pole and ensure sealing performance between the terminal-pole and a housing, thereby improving a yield of the battery.

According to a first aspect, this application provides a battery housing structure. The battery housing structure includes a housing and a terminal-pole. The housing includes a housing bottom plate, a plurality of side plates that surround a periphery of the housing bottom plate, and a cover plate. The housing bottom plate and the plurality of side plates jointly define an accommodation cavity provided with an opening, and an area of the cover plate is greater than an area of each side plate. The cover plate is disposed at the opening and configured to close the opening, a surface of the cover plate away from the accommodation cavity is provided with a groove that is concave toward the accommodation cavity, and a bottom wall of the groove is provided with a through hole communicating with the accommodation cavity. The terminal-pole extends into the groove through the through hole. In a thickness direction of the cover plate, a height of the groove is H1, a height of the terminal-pole exposed from the bottom wall of the groove in a direction away from the accommodation cavity is H2, and a thickness of the housing is H3, where H2 ≤ H1 ≤ 0.6 × H3, and H1, H2, and H3 are measured in the same unit.

In the battery housing structure of this application, the terminal-pole is mounted on a cover plate with a large area, so that a layout space is large, and the terminal-pole can be disposed according to an actual requirement. Because the area of the cover plate is greater than an area of the side plate, the terminal-pole can be disposed on a large surface of the battery. In addition, difficulty in fastening and riveting the terminal-pole can be reduced, and sealing performance of the battery housing structure can be improved. In addition, the cover plate is provided with the groove, and the groove is provided with the through hole communicating with the accommodation cavity, so that the terminal-pole can extend into the accommodation cavity through the through hole, and is electrically connected to the jelly roll, thereby leading electric energy out of the jelly roll. It may be ensured that, by selecting H2 ≤ H1 ≤ 0.6 × H3, the terminal-pole is hidden in the groove, thereby optimizing entire spatial layout of the battery housing structure, facilitating assembly of the battery, and facilitating a thinner design of the battery.

In an embodiment, the bottom wall of the groove is provided with a liquid injection hole and a sealing cover, the liquid injection hole communicates with the accommodation cavity, and the sealing cover is configured to seal the liquid injection hole.

In this embodiment, the liquid injection hole communicating with the accommodation cavity is disposed to inject electrolyte into the accommodation cavity. The sealing cover is disposed to seal the liquid injection hole. By disposing the liquid injection hole and the sealing cover in the groove, an overall volume of the battery housing structure can be reduced, thereby helping optimize spatial layout.

In an embodiment, the liquid injection hole is disposed at a middle position of the groove in a width direction of the cover plate.

In this embodiment, the liquid injection hole is disposed at a middle position of the groove in the width direction of the cover plate, to enable the electrolyte to uniformly permeate the jelly roll.

In an embodiment, in the thickness direction of the cover plate, the height of the sealing cover exposed from the bottom wall of the groove in the direction away from the accommodation cavity is H4, where H4 ≤ H1, and H1 and H4 are measured in the same unit.

In this embodiment, because the height of the sealing cover exposed from the bottom wall of the groove is less than or equal to the height of the groove, that is, the sealing cover is accommodated in the groove in the thickness direction of the cover plate, the overall volume of the battery housing structure can be further reduced.

In an embodiment, the terminal-pole includes a first terminal-pole and a second terminal-pole whose polarities are opposite to each other, the through hole includes a first through hole and a second through hole that are spaced apart, the first terminal-pole extends into the accommodation cavity through the first through hole, and the second terminal-pole extends into the accommodation cavity through the second through hole.

In an embodiment, the first terminal-pole includes a plurality of first sub-terminal-poles that are spaced apart, the first through hole is in a one-to-one correspondence to the first sub-terminal-pole, and the first sub-terminal-pole extends into the accommodation cavity through the corresponding first through hole; and/or the second terminal-pole includes a plurality of second sub-terminal-poles that are spaced apart, the second through hole is in a one-to-one correspondence to the second sub-terminal-pole, and the second sub-terminal-pole extends into the accommodation cavity through the corresponding second through hole.

In this embodiment, the first terminal-pole is configured to include a plurality of first sub-terminal-poles, and the second terminal-pole is configured to include a plurality of second sub-terminal-poles, that is, a plurality of first sub-terminal-poles or a plurality of second sub-terminal-poles are disposed to lead electric energy out of the jelly roll. This prevents heat concentration at a joint between the first terminal-pole and the jelly roll or between the second terminal-pole and the jelly roll, thereby preventing localized overheating and affecting service life of the battery.

In an embodiment, the thickness of the housing is a sum of a thickness of the housing bottom plate, a height of the side plate, and a thickness of the cover plate in the thickness direction of the cover plate.

According to a second aspect, this application provides a battery. The battery includes a battery housing structure provided in any one of embodiments of the first aspect of this application and a jelly roll. The jelly roll is accommodated in the accommodation cavity.

It will be understood that the battery in the second aspect of this application uses the battery housing structure according to the first aspect of this application, so that the battery has all possible beneficial effects in any one of embodiments according to the first aspect of this application.

In an embodiment, a tab further protrudes from the jelly roll, and the terminal-pole is electrically connected to the tab.

In an embodiment, the tab protrudes from a first side wall of the jelly roll, and the first side wall is a side wall of the jelly roll close to the groove in a length direction of the battery.

In one embodiment, an orthographic projection of the tab on the housing bottom plate at least partially overlaps an orthographic projection of the groove on the housing bottom plate.

In this embodiment, the projection of the tab on the housing bottom plate at least partially overlaps the projection of the groove on the housing bottom plate, to facilitate a connection between the terminal-pole and the tab. In an embodiment, the battery further includes a connecting sheet, the connecting sheet is connected to a side of the terminal-pole located in the accommodation cavity, and the terminal-pole is connected to the tab via the connecting sheet.

In this embodiment, based on a relatively small size of an end of the terminal-pole connected to the tab, that is, a relatively small contact area between the terminal-pole and the tab, the tab is connected to the terminal-pole via the connecting sheet, to ensure reliability of the connection between the tab and the terminal-pole.

In an embodiment, the terminal-pole includes the first terminal-pole and the second terminal-pole whose polarities are opposite to each other, and the connecting sheet includes a first connecting sheet and a second connecting sheet; the first terminal-pole includes the plurality of first sub-terminal-poles, a side of each first sub-terminal-pole located in the accommodation cavity is connected to one first connecting sheet, and a plurality of first connecting sheets are of an integrated structure; and/or the second terminal-pole includes the plurality of second sub-terminal-poles, a side of each second sub-terminal-pole located in the accommodation cavity is connected to one second connecting sheet, and a plurality of second connecting sheets are of an integrated structure.

In this embodiment, a plurality of connecting sheets that are connected to sub-terminal-poles having a same polarity are configured as an integrated structure, to reduce a quantity of assembly parts, thereby helping simplify the structure of the battery and reducing assembly time.

In an embodiment, the housing is made of a metal material.

In this embodiment, based on good thermal conductivity and mechanical strength of the metal material, the housing may be made of a metal material such as an aluminum alloy, a nickel alloy, stainless steel, or a chromium alloy, so that mechanical strength of the housing can be improved and heat dissipation performance of the battery can be improved, thereby prolonging service life of the battery.

In an embodiment, the housing has electrical conductivity, the battery further includes a first insulating member, and the first insulating member is located between the tab and the groove.

In this embodiment, because the housing has electrical conductivity, the housing can be used as a positive electrode lead-out terminal or a negative terminal-pole lead-out terminal of the jelly roll. In addition, because the tab needs to be electrically connected to the terminal-pole, by disposing the first insulating member between the tab and the groove, an electrical connection between the tab and the cover plate can be avoided, so that abnormal phenomena such as a short circuit can be avoided, thereby improving safety of the battery.

In an embodiment, the battery further includes a second insulating member, and the second insulating member is located between the groove and the terminal-pole.

In this embodiment, by disposing the second insulating member between the groove and the terminal-pole, an electrical connection between the terminal-pole and the cover plate can be avoided, so that abnormal phenomena such as a short circuit can be avoided, thereby improving safety of the battery.

In an embodiment, the second insulating member is configured to: separate the terminal-pole from the cover plate, and seal a gap between the terminal-pole and the cover plate.

In this embodiment, by disposing the second insulating member, contact between the terminal-pole and the cover plate can be avoided. This can avoid electrical connection between the terminal-pole and the cover plate, so that a short circuit is avoided. In addition, by disposing the second insulating member, sealing performance between the terminal-pole and the cover plate can be further ensured.

In an embodiment, the battery further includes an insulating gasket, and the insulating gasket is located between the tab and the housing bottom plate.

In this embodiment, by disposing the insulating gasket between the tab and the housing bottom plate, an electrical connection between tabs having different polarities through the housing can be avoided, so that abnormal phenomena such as a short circuit can be avoided, thereby improving safety of the battery.

In an embodiment, in a thickness direction of the battery, a periphery of the cover plate and a periphery of the housing bottom plate are separately fastened to the side plate by soldering.

In this embodiment, stress concentration can be prevented, and no transition section is disposed between the cover plate, the housing bottom plate, and the side plate, thereby reducing influence of the transition section on a size of the jelly roll disposed in an accommodation space and improving energy density of the battery.

In an embodiment, an opening of the groove is provided with a fillet, there is a gap between a side wall of the side plate and a side wall of the groove, and in the length direction of the battery, a width of the gap is W1, and an inner radius of the fillet is R1, where W1 ≥ R1, and W1 and R1 are measured in a same unit.

In this embodiment, because the opening of the groove is provided with the fillet, and the gap is disposed between the side wall of the side plate and the side wall of the groove, when the side plate and the cover plate are assembled, the side wall of the side plate can avoid a position of the fillet in the groove, thereby improving stability of assembly of the cover plate and the side plate, and improving sealing performance of the battery. In addition, the width of the gap is greater than or equal to the inner radius of the fillet, so that the side plate and the cover plate can be assembled more easily.

According to a third aspect, this application provides an electric device. The electric device includes the battery in any one of the foregoing embodiments.

It will be understood that the electric device provided in the third aspect of this application uses the battery housing structure according to the first aspect of this application or the battery according to the second aspect of this application, so that the electric device has all possible beneficial effects in embodiments according to the first aspect or the second aspect of this application.

### BRIEF DESCRIPTION OF DRAWINGS

FIG. 1 is a diagram of a structure of an electric device according to an embodiment of this application;
FIG. 2 is a diagram of a structure of a battery at a viewing angle according to an embodiment of this application;
FIG. 3 is an exploded view of a battery according to an embodiment of this application;
FIG. 4 is a diagram of a structure of a cover plate according to an embodiment of this application;
FIG. 5 is a partial enlarged view of a groove according to an embodiment of this application;
FIG. 6 is a diagram of a structure of a battery at another viewing angle according to an embodiment of this application;
FIG. 7 is a sectional view of a terminal-pole in a length direction of the battery in FIG. 6;
FIG. 8 is a diagram of a structure of a battery at a viewing angle according to another embodiment of this application;
FIG. 9 is a sectional view of a liquid injection hole in a length direction of a battery according to an embodiment of this application;
FIG. 10 is a diagram of a structure of a battery according to another embodiment of this application;
FIG. 11 is an exploded view of a battery according to another embodiment of this application;
FIG. 12 is a partially exploded view of a battery according to another embodiment of this application;
FIG. 13 is a sectional view of a sub-terminal-pole in a width direction of the battery in FIG. 10;
FIG. 14 is a diagram of a structure of a battery at a viewing angle according to another embodiment of this application;
FIG. 15 is a sectional view of a sub-terminal-pole in a width direction of a battery according to another embodiment of this application; and
FIG. 16 is a diagram of a connection method between a cover plate and a side plate according to this application.

Reference numerals: 300: electric device; 301: body; 302: circuit board; 200: battery; 201: jelly roll; 2011: first side wall; 202: tab; 202a: first tab; 202b: second tab; 2021: sub-tab; 2021a: first sub-tab; 2021b: second sub-tab; 100: battery housing structure; 10: housing; 11: housing bottom plate; 12: side plate; 121: accommodation cavity; 13: cover plate; 14: groove; 141: through hole; 141a: first through hole; 141b: second through hole; 142: liquid injection hole: 143: sealing cover; 144: fillet; 145: gap; 20: terminal-pole; 20a: first terminal-pole; 20b: second terminal-pole; 21: sub-terminal-pole; 21a: first sub-terminal-pole; 21b: second sub-terminal-pole; 30: first insulating member; 40: second insulating member; 50: connecting sheet; 50a: first connecting sheet; 50b: second connecting sheet; 60: insulating gasket; 001: first direction; 002: second direction; 003: third direction.

### DESCRIPTION OF EMBODIMENTS

For ease of understanding this application, this application will be described more comprehensively below with reference to the related accompanying drawings. Preferred implementations of this application are shown in the accompanying drawings. However, this application may be implemented in many different forms and is not limited to implementations described herein. Instead, these implementations are provided for a more thorough and comprehensive understanding of the disclosure of this application.

The following descriptions of embodiments are made with reference to additional illustrations, and are used to illustrate specific embodiments in which this application can be implemented. The serial numbers for components used herein, such as "first", and "second" are merely used to distinguish described objects and do not have any sequential or technical meaning. Terms "connection" and "linkage" stated in this application include both direct and indirect connections (linkages), unless otherwise specified. Directional terms mentioned in this application, such as "up", "down", "front", "back", "left", "right", "inner", "outer", and "lateral" are merely directions with reference to the accompanying drawings. Therefore, the directional terms used are for better and clearer explanation and understanding of this application, instead of indicating or implying that apparatuses or elements indicated must have particular orientations, and be constructed and operated in the particular orientations, so that these terms will not be construed as limiting this application.

In the description of this application, unless otherwise expressly specified and limited, the terms "mount", "connect", "link", and the like will be understood in a broad sense, such as, a fixed connection, a detachable connection, or an integral connection; a mechanical connection; or a direct connection, an indirect connection through an intermediate medium, or an internal connection of two elements. For those of ordinary skill in the art, the specific meanings of the foregoing terms in this application will be understood according to specific situations. It will be noted that in the specification, claims, and accompanying drawings of this application, the terms "first", "second" and the like are intended to distinguish different objects but do not indicate a particular order. In addition, the terms "include/comprise" "may include/comprise", "contain," or "may contain" used in this application indicate the presence of a disclosed corresponding function, operation, element, or the like, and do not limit the presence of one or a plurality of other functions, operations, elements. In addition, the term "include/comprise" or "contain" indicates the presence of a corresponding feature, number, step, operation, element, component, or a combination thereof disclosed in the specification, but does not exclude the presence or addition of one or a plurality of other features, numbers, steps, operations, elements, components, or combinations thereof, and is intended to cover a non-exclusive inclusion.

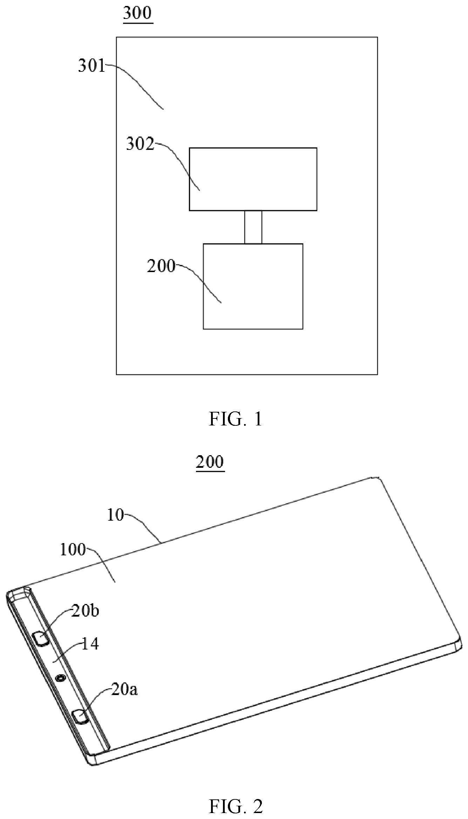

Referring to FIG. 1, FIG. 1 is a diagram of a structure of an electric device 300 according to an embodiment of this application.

As shown in FIG. 1, the electric device 300 in this application may be configured as a mobile phone, and the mobile phone includes a body 301, a circuit board 302, and a battery 200. The circuit board 302 and the battery 200 are both accommodated in the body 301, the battery 200 is connected to the circuit board 302, the battery 200 is configured to provide electric energy, and the circuit board 302 is configured to implement an electrical control function of the electric device 300. It will be understood that, in some other embodiments of this application, the electric device 300 may alternatively be a terminal device that is powered by electricity, such as a tablet computer, a notebook computer, or an unmanned aerial vehicle, a vehicle such as an electric vehicle, or an automobile, a household appliance, a remote controller, or the like. This is not particularly limited in this application.

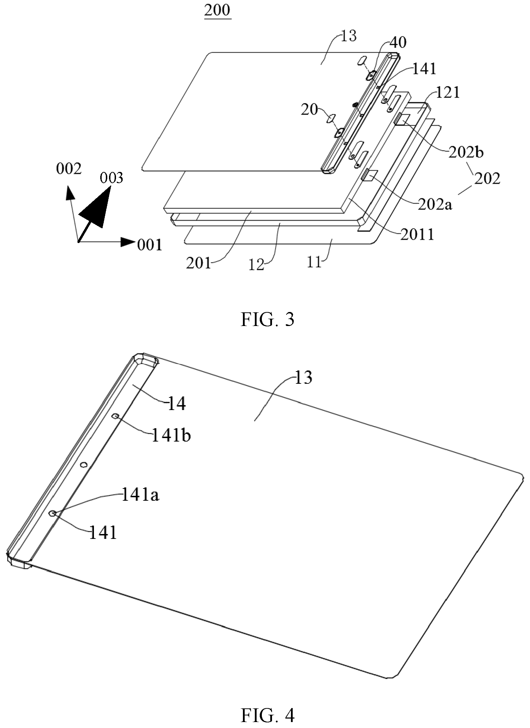

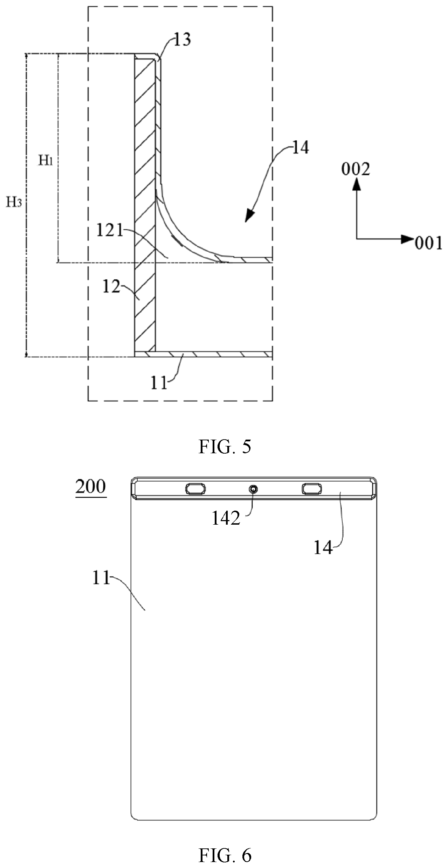

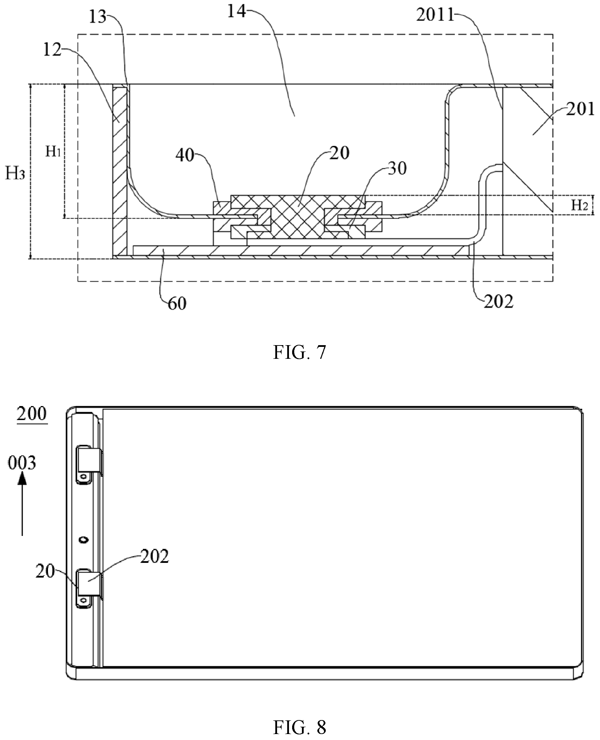

Referring to FIG. 2 to FIG. 7, FIG. 2 is a diagram of a structure of a battery 200 at a viewing angle according to an embodiment of this application; FIG. 3 is an exploded view of a battery 200 according to an embodiment of this application; FIG. 4 is a diagram of a structure of a cover plate 13 according to an embodiment of this application; FIG. 5 is a partial enlarged view of a groove 14 according to an embodiment of this application; FIG. 6 is a diagram of a structure of a battery 200 at another viewing angle according to an embodiment of this application; and FIG. 7 is a sectional view of a terminal-pole 20 in a length direction of the battery 200 in FIG. 6.

As shown in FIG. 2 to FIG. 7, the battery 200 in this application includes a battery housing structure 100 and a jelly roll 201. The battery housing structure 100 includes a housing 10 and a terminal-pole 20. The housing 10 includes a housing bottom plate 11, a plurality of side plates 12, and a cover plate 13. The plurality of side plates 12 surround a periphery of the housing bottom plate 11. The housing bottom plate 11 and the plurality of side plates 12 enclose an accommodation cavity 121 provided with an opening. The cover plate 13 is connected to the side plate 12, and covers the opening to seal the accommodation cavity 121. An area of the housing bottom plate 11 is larger than an area of each side plate 12. That is, an area of the cover plate 13 is larger than the area of each side plate 12. The jelly roll 201 is accommodated and fastened in the accommodation cavity 121. In this embodiment, the jelly roll 201 may be a wound-type jelly roll or a laminated jelly roll. A tab 202 protrudes from the first side wall 2011 of the jelly roll 201, to lead electric energy out of the jelly roll 201. The first side wall 2011 is a side wall of the jelly roll 201 in a first direction 001, and the first direction 001 is a length direction of the jelly roll 201, that is, the length direction of the battery 200. Specifically, the first side wall 2011 is a side wall of the jelly roll 201 close to the groove 14 in the first direction 001. The terminal-pole 20 is disposed on the cover plate 13, and is electrically connected to the jelly roll 201.

Specifically, the cover plate 13 is provided with the groove 14, and the groove 14 is located on a side of the cover plate 13 away from the accommodation cavity 121. Alternatively, it will be understood that a surface of the cover plate 13 away from the accommodation cavity 121 is provided with a groove 14 that is concave toward the accommodation cavity 121. A bottom wall of the groove 14 is further provided with a through hole 141, and the through hole 141 extends into the bottom wall of the groove 14 in a second direction 002 and communicates with the accommodation cavity 121. The second direction 002 is a thickness direction of the cover plate 13. The terminal-pole 20 is disposed on the cover plate 13. Because the area of the cover plate 13 is greater than an area of the side plate 12, the terminal-pole 20 is disposed on a large surface of the battery 200. Therefore, the layout space is relatively large, and a position of the terminal-pole 20 can be disposed according to an actual requirement. This helps reduce difficulty in fastening and riveting the terminal-pole 20, and helps improve sealing performance of the battery housing structure 100 in this application.

In other words, in this application, disposing the terminal-pole 20 on the cover plate 13 eliminates the constraint of a thickness dimension of the battery 200. This provides a sufficient space for the terminal-pole 20, thereby reducing difficulty in fastening the terminal-pole 20. Therefore, sealing performance of the battery housing structure 100 in this application is ensured, and a yield of the battery 200 is improved. Further, the terminal-pole 20 is disposed in the groove 14, and is disposed at the through hole 141. The terminal-pole 20 extends into the through hole 141 and is connected to the tab 202, thereby leading electric energy out of the jelly roll 201 from the housing 10. It will be understood that the terminal-pole 20 is disposed in the groove 14, so that an overall volume of the battery housing structure 100 can be reduced, thereby facilitating a thinner design of the battery 200.

In the thickness direction of the cover plate 13, that is, in the second direction 002, a height of the groove 14 is H1, a height of the terminal-pole 20 exposed from the bottom wall of the groove 14 in a direction away from the accommodation cavity 121 is H2, and a thickness of the housing 10 is H3, where H2 ≤ H1 ≤ 0.6 × H3, and H1, H2, and H3 are measured in the same unit. The thickness H3 of the housing 10 is a sum of a thickness of the housing bottom plate 11, a height of the side plate 12, and a thickness of the cover plate 13 in the second direction 002.

It will be understood that, because the thickness H3 of the housing 10 is constant, the height of the groove 14 satisfies H1 ≤ 0.6 × H3, to prevent the groove 14 from being excessively high, that is, prevent the groove 14 from occupying an excessive space of the accommodation cavity 121 in the thickness direction of the cover plate 13, which may not be conducive to a subsequent electrical connection between the terminal-poles 20, other components, and the jelly roll 201. Thus, the yield of the battery 200 can be improved. In addition, because the height H2 of the terminal-pole 20 exposed from the bottom wall of the groove 14 in the direction away from the accommodation cavity 121 is equal to the height H1 of the groove 14, a portion of the terminal-pole 20 exposing the accommodation cavity 121 is completely accommodated in the groove 14. This prevents the size of the battery 200 in the thickness direction of the cover plate 13 from being increased, thereby helping improve space utilization of the battery 200 and facilitating the thinner design of the battery 200. Alternatively, it will be understood that, by disposing H2 ≤ H1 ≤ 0.6 × H3, the terminal-pole 20 can be hidden in the groove 14, thereby optimizing entire spatial layout of the battery housing structure 100, and facilitating assembly of the battery 200.

In the embodiment shown in FIG. 3, there are two tabs 202, and the two tabs 202 are spaced apart on the first side wall 2011 of the jelly roll 201 in a third direction 003. The third direction 003 is a width direction of the jelly roll 201, that is, a width direction of the battery 200, that is, a width direction of the cover plate 13. It will be noted that, for ease of reference, in this application, the two tabs 202 are respectively defined as a first tab 202a and a second tab 202b. Electrical polarities of the two tabs 202 are opposite to each other, that is, polarities of the first tab 202a and the second tab 202b are opposite to each other. For example, if the first tab 202a is a negative electrode, the second tab 202b is a positive electrode. In another embodiment, the first tab 202a may be a positive electrode, and the second tab 202b may be a negative electrode. This is not particularly limited in this application.

In an embodiment, there are two through holes 141 and two terminal-poles 20. It will be noted that, for ease of description, in this application, the two terminal-poles 20 are respectively defined as a first terminal-pole 20a and a second terminal-pole 20b. The through hole 141 may alternatively include a first through hole 141a and a second through hole 141b. The first terminal-pole 20a passes through the first through hole 141a and is electrically connected to the first tab 202a, and the second terminal-pole 20b passes through the second through hole 141b and is electrically connected to the second tab 202b. Because the two terminal-poles 20 are respectively connected to tabs 202 whose polarities are different, the polarities of the two terminal-poles 20 are different, and the two terminal-poles 20 are respectively a positive terminal-pole and a negative terminal-pole. The tabs 202 and the terminal-poles 20 jointly lead electric energy out of the jelly roll 201 from the housing 10.

In another embodiment, because the housing 10 is made of a metal material such as stainless steel, a nickel alloy, or a chromium alloy, the housing 10 has electrical conductivity. In this case, there may be only one through hole 141 and one terminal-pole 20. The terminal-pole 20 passes through the through hole 141 and is electrically connected to one of the tabs 202, and the other tab 202 may be electrically connected to the housing 10. The tabs 202, the terminal-poles 20, and the housing 10 jointly lead electric energy out of the jelly roll 201 from the housing 10.

It will be noted that, in this embodiment, because the housing 10 has electrical conductivity, the battery 200 in this application further includes a second insulating member 40, and the second insulating member 40 is located between the groove 14 and the terminal-pole 20. Alternatively, it will be understood that the second insulating member 40 is sleeved on a periphery of the terminal-pole 20. The second insulating member 40 is configured to separate the terminal-pole 20 from the housing 10, that is, separate the terminal-pole 20 from the cover plate 13, to avoid contact between the terminal-pole 20 and the cover plate 13. This can avoid an electrical connection between the terminal-pole 20 and the cover plate 13, so that a short circuit can be avoided. Further, in addition to an insulating function, the second insulating member 40 may be further configured to seal a gap between the terminal-pole 20 and the cover plate 13, thereby ensuring sealing performance between the terminal-pole 20 and the cover plate 13.

Referring to FIG. 8, FIG. 8 is a diagram of the structure of a battery at a viewing angle according to another embodiment of this application.

As shown in FIG. 8, in an embodiment, an end of the terminal-pole 20 close to the tab 202 may be connected to the tab 202 by soldering or bonding. This is not particularly limited in this application. It will be understood that in this connection method, the structure of the battery 200 is simplified without adding auxiliary assemblies such as an adapter, thereby improving assembly efficiency. In addition, due to this connection method, bending times of the tab 202 can be reduced, thereby simplifying a preparation process.

Referring to FIG. 5 to FIG. 7, in an embodiment, a surface of the cover plate 13 away from the jelly roll 201 is provided with the groove 14, and the groove 14 is disposed between the side plate 12 and the first side wall 2011 of the jelly roll 201. In this case, each through hole 141 is disposed on the bottom wall of the groove 14, that is, each terminal-pole 20 is disposed in the groove 14. In addition, in the second direction 002, that is, in the thickness direction of the cover plate 13, an orthographic projection of the tab 202 on the housing bottom plate 11 partially overlaps an orthographic projection of the groove 14 on the housing bottom plate 11.

It will be understood that, in this embodiment, because the cover plate 13 is provided with the groove 14, the portion of each terminal-pole 20 exposing the accommodation cavity 121 may be accommodated in the groove 14, thereby reducing an overall volume of the battery 200, and then facilitating miniaturization of the battery 200 or improving energy density of the battery 200. In addition, in the second direction 002, the orthographic projection of the tab 202 on the housing bottom plate 11 partially overlaps the orthographic projection of the groove 14 on the housing bottom plate 11, to facilitate a connection between the terminal-pole 20 and the tab 202.

It will be noted that, in the foregoing embodiment, a relative position between the tab 202 and the cover plate 13 is merely described as an example. For example, in another embodiment, in the second direction 002, an orthographic projection of the tab 202 on a surface of the housing bottom plate 11 may completely overlap an orthographic projection of the groove 14 on the surface of the housing bottom plate 11, which helps implement an electrical connection between the terminal-pole 20 and the tab 202.

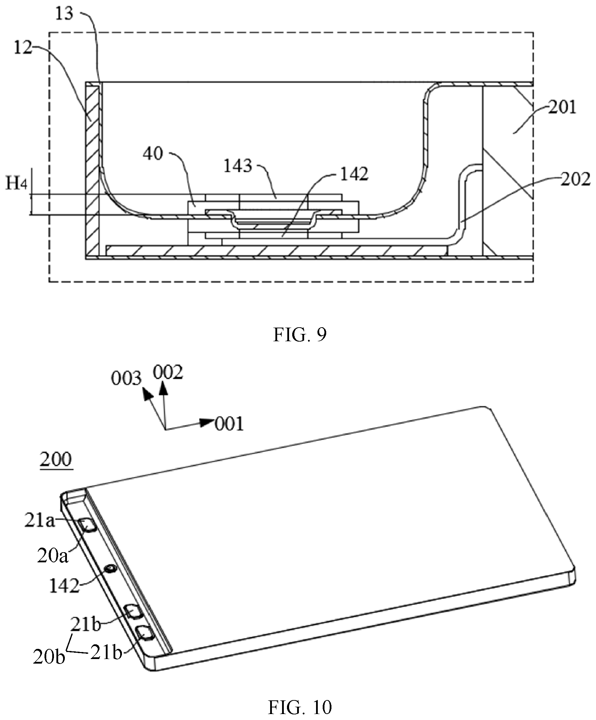

Referring to FIG. 9, FIG. 9 is a sectional view of the liquid injection hole 142 in the length direction of the battery 200 according to an embodiment of this application.

As shown in FIG. 6 and FIG. 9, in an embodiment, the liquid injection hole 142 and a sealing cover 143 are further disposed on the cover plate 13. Specifically, the liquid injection hole 142 is provided on the bottom wall of the groove 14, and communicates with the accommodation cavity 121. The sealing cover 143 is used to seal the liquid injection hole 142.

It will be understood that, because the bottom wall of the groove 14 is provided with the liquid injection hole 142 communicating with the accommodation cavity 121, electrolyte can be injected into the accommodation cavity 121. The sealing cover 143 is configured to seal the liquid injection hole 142, to ensure sealing performance of the battery housing structure 100 in this application. In addition, the overall volume of the battery housing structure can be reduced, thereby helping optimize spatial layout.

In an embodiment, the liquid injection hole 142 may be disposed at a middle position of the groove 14 in the third direction 003, to enable the electrolyte to uniformly permeate the jelly roll 201, where the third direction 003 is the width direction of the battery 200.

In an embodiment, in the thickness direction of the cover plate 13, the height of the sealing cover 143 exposed from the bottom wall of the groove 14 in the direction away from the accommodation cavity 121 is H4, where H4 ≤ H1, and H1 and H4 are measured in a same unit. That is, in the second direction 002, the sealing cover 143 is accommodated in the groove 14.

It will be understood that, in this embodiment, because a height of the sealing cover 143 exposed from the bottom wall of the groove 14 in the direction away from the accommodation cavity 121 is less than or equal to the height of the groove 14, the overall volume of the battery housing structure 100 in this application can be further reduced.

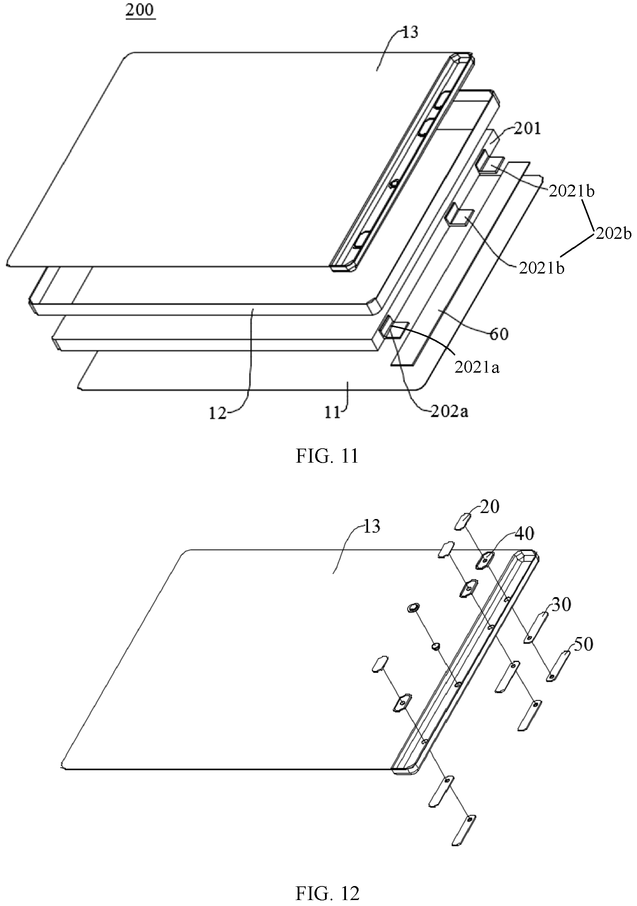

Referring to FIG. 10 and FIG. 11, FIG. 10 is a diagram of the structure of the battery 200 according to another embodiment of this application; and FIG. 11 is an exploded view of the battery 200 according to another embodiment of this application.

In an embodiment, the first tab 202a and the second tab 202b each may include one or more sub-tabs 2021. Correspondingly, the first terminal-pole 20a and the second terminal-pole 20b each may include one or more sub-terminal-poles 21. For example, in embodiments shown in FIG. 10 and FIG. 11, the first tab 202a includes one first sub-tab 2021a, the second tab 202b includes two second sub-tabs 2021b, and polarities of the two second sub-tabs 2021b are the same. The first terminal-pole 20a includes one first sub-terminal-pole 21a, and the second terminal-pole 20b includes two second sub-terminal-poles 21b. Each first sub-terminal-pole 21a passes through the one through hole 141 and is connected to the one first sub-tab 2021a, and each second sub-terminal-pole 21b passes through the one through hole 141 and is connected to one second sub-tab 2021b.

It will be understood that, in this embodiment, a plurality of pairs of sub-tabs 2021 and sub-terminal-poles 21 that cooperate with each other are disposed to lead electric energy out of the accommodation cavity 121, to divide an originally centralized and unified electric energy transmission path into a plurality of transmission sub-paths. This can prevent heat from concentrating at the tab 202 and causing local overheating, thereby helping improve electrochemical performance of the battery 200 and prolong a service life of the battery 200.

It will be noted that quantities of tabs 202 and terminal-poles 20 in this embodiment are merely described as examples, and do not represent actual quantities of tabs 202 and terminal-poles 20. In other words, the quantities of tabs 202 and terminal-poles 20 may be adaptively adjusted according to an application scenario. This is not specifically limited in this application.

In an embodiment, there are a plurality of first sub-tabs 2021a. The plurality of first sub-tabs 2021a may be folded and then pre-soldered. Then, the first sub-tab 2021a formed after being pre-soldered is electrically connected to the first sub-terminal-pole 21a. Alternatively, the plurality of first sub-tabs 2021a are folded and directly electrically connected to the first sub-terminal-pole 21a.

In addition, in this embodiment, in the thickness direction of the battery, insulating tapes (not shown in the figure) may be adhered to two opposite sides of the first sub-tab 2021a or the second sub-tab 2021b, to prevent a short circuit of the battery caused by contact between the first sub-tab 2021a and the housing.

It will be noted that, when there are a plurality of second sub-tabs 2021b, the plurality of second sub-tabs 2021b may also be electrically connected to the second sub-terminal-pole 21b in the manner in the foregoing embodiment. In addition, the insulating tapes may also be adhered, to prevent a short circuit of the battery caused by contact between the second sub-tab 2021b and the housing. Details are not described in this application again.

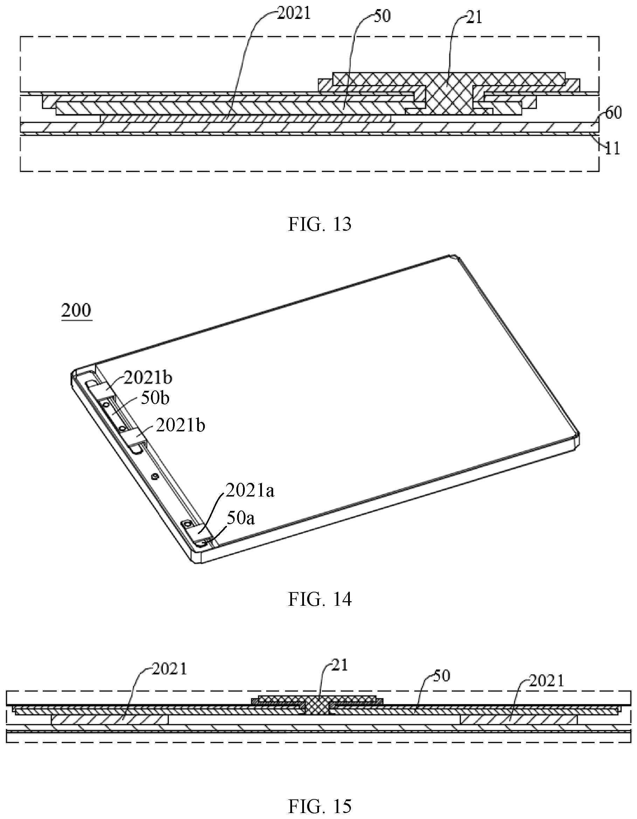

Referring to FIG. 12 and FIG. 13, FIG. 12 is a partially exploded view of the battery 200 according to another embodiment of this application; and FIG. 13 is a sectional view of the sub-terminal-pole 21 in the width direction of the battery 200 in FIG. 10.

As shown in FIG. 10 to FIG. 13, in an embodiment, the battery 200 further includes a connecting sheet 50. The tab 202 is connected to the terminal-pole 20 via the connecting sheet 50. Specifically, an end of the terminal-pole 20 may be riveted to the connecting sheet 50, and then the tab 202 is electrically connected to the connecting sheet 50. That is, the connecting sheet 50 may be sleeved on an end of the sub-terminal-pole 21 close to the sub-tab 2021, and then the sub-tab 2021 is electrically connected to the sub-terminal-pole 21.

It will be understood that, because the sub-terminal-pole 21 passes through the through hole 141 and is connected to the sub-tab 2021, a size of the end of the sub-terminal-pole 21 close to the sub-tab 2021 is relatively small, and a width of the sub-tab 2021 is also relatively small. As a result, the contact area between the sub-terminal-pole 21 and the sub-tab 2021 is small. In this application, the sub-terminal-pole 21 is electrically connected to the sub-tab 2021 via the connecting sheet 50, so that an area of a solderable region between the sub-terminal-pole 21 and the sub-tab 2021 can be increased, thereby facilitating an electrical connection between the sub-terminal-pole 21 and the sub-tab 2021. This ensures reliability of the connection between the sub-tab 2021 and the sub-terminal-pole 21.

Referring to FIG. 14, FIG. 14 is a diagram of the structure of the battery 200 at a viewing angle according to another embodiment of this application.

As shown in FIG. 10 to FIG. 14, the connecting sheet 50 connected to the two second sub-tabs 2021b is of an integrated structure. Specifically, the connecting sheet 50 includes a first connecting sheet 50a and a second connecting sheet 50b; the first terminal-pole 20a includes the plurality of first sub-terminal-poles 21a, a side of each first sub-terminal-pole 21a located in the accommodation cavity 121 is connected to one first connecting sheet 50a, and a plurality of first connecting sheets 50a are of an integrated structure; and/or the second terminal-pole 20b includes the plurality of second sub-terminal-poles 21b, a side of each second sub-terminal-pole 21b located in the accommodation cavity 121 is connected to one second connecting sheet 50b, and a plurality of second connecting sheets 50b are of an integrated structure. It will be understood that, based on the same polarity of the two second sub-tabs 2021b, the connecting sheet 50 connected to the two second sub-tabs 2021b is configured as an integrated structure, to reduce a quantity of assembly parts, thereby simplifying the structure of the battery 200 and helping reduce assembly time.

It will be noted that, in the foregoing embodiment, a quantity of second sub-tabs 2021b connected to the same connecting sheet 50 is merely described as an example. In some other embodiments, there may be a plurality of second sub-tabs 2021b connected to the same connecting sheet 50, which also reduces the quantity of assembly parts. Similarly, for a plurality of first sub-tabs 2021a having the same polarity, a connecting sheet 50 that is connected to the first sub-tabs 2021a may also be of an integrated structure, and same effect can also be achieved. Details are not described in this application again.

In the embodiment shown in FIG. 7, a first insulating member 30 is further disposed between the tab 202 and the groove 14. Alternatively, it will be understood that a first insulating member 30 is further disposed between the connecting sheet 50 and the cover plate 13. It will be understood that, based on electrical conductivity of the housing 10, by disposing the first insulating member 30 between the connecting sheet 50 and the cover plate 13, an electrical connection between the connecting sheet 50 and the housing 10 can be avoided, thereby avoiding an electrical connection between the tabs 202 having different polarities. Therefore, abnormal phenomena such as a short circuit can be avoided.

As shown in FIG. 7, in an embodiment, the battery 200 further includes an insulating gasket 60, and the insulating gasket 60 is located between the tab 202 and the housing bottom plate 11. It will be understood that the housing 10 is made of a metal material, so that the housing 10 has electrical conductivity. By disposing the insulating gasket 60 between the tab 202 and the housing bottom plate 11, the electrical connection between the tabs 202 having different polarities through the housing 10 can be avoided, so that abnormal phenomena such as a short circuit can be avoided, thereby improving safety of the battery 200. Specifically, the insulating gasket 60 may be formed on a surface of the housing bottom plate 11 close to the tab 202 or on a surface of the tab 202 close to the housing bottom plate 11 by adhering the insulating tape or spraying an insulation substance.

Referring to FIG. 15, FIG. 15 is a sectional view of the sub-terminal-pole 21 in the width direction of the battery 200 according to another embodiment of this application.

As shown in FIG. 15, in an embodiment, one sub-terminal-pole 21 may be electrically connected to two sub-tabs 2021 having the same polarity via the connecting sheet 50. It will be understood that, this design can reduce a quantity of required parts, thereby simplifying the structure of the battery 200 and reducing the assembly time.

It will be noted that, in some other embodiments, the one sub-terminal-pole 21 may also be electrically connected to a plurality of sub-tabs 2021 having the same polarity via the connecting sheet 50. This is not particularly limited in this application.

Referring to FIG. 5, in an embodiment, the cover plate 13 and the housing bottom plate 11 respectively abut against and are fastened to a side wall of the side plate 12. That is, in the thickness direction of the battery 200, a periphery of the cover plate 13 and the periphery of the housing bottom plate 11 may be respectively fastened to two side end surfaces of the side plate 12 by soldering. In this design, stress concentration can be prevented, and no transition section is disposed between the cover plate 13, the housing bottom plate 11, and the side plate 12, thereby reducing influence of the transition section on a size of the jelly roll 201 disposed in an accommodation space and improving energy density of the battery 200.

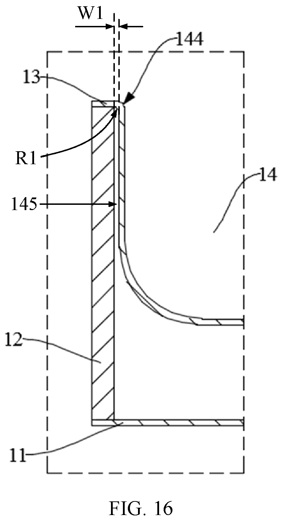

Referring to FIG. 16, FIG. 16 is a diagram of a connection method between the cover plate 13 and the side plate 12 according to this application.

As shown in FIG. 16, in an embodiment, an opening of the groove 14 is provided with a fillet 144. It will be understood that, because the groove 14 is formed by pressing the cover plate 13, the fillet 144 is generally disposed for transition, to avoid stress concentration. In the embodiment shown in FIG. 16, there is a gap 145 between the side wall of the side plate 12 and the side wall of the groove 14, and in the length direction of the battery 200, a width of the gap 145 is greater than or equal to an inner radius of the fillet 144. Because the opening of the groove 14 is provided with the fillet 144, and the gap 145 is disposed between the side wall of the side plate 12 and the side wall of the groove 14, when the side plate 12 and the cover plate 13 are assembled, the side wall of the side plate 12 can avoid a position of the fillet 144 in the groove 14, thereby improving stability of assembly of the cover plate 13 and the side plate 12, and improving sealing performance of the battery 200. In addition, the width of the gap 145 is greater than or equal to the inner radius of the fillet 144, so that the side plate 12 and the cover plate 13 can be assembled more easily.

In an embodiment, a surface of the cover plate 13 away from the jelly roll 201 is further provided with an explosion-proof mark (not shown in the figure). It will be understood that, because a thickness of the explosion-proof mark is less than a thickness of the cover plate 13 at other positions, when a pressure inside the battery 200 is excessively high, the explosion-proof mark may be broken, to discharge gas inside the battery 200, thereby achieving pressure relief. This design can prevent the battery 200 from exploding, thereby improving safety of the battery 200.

It will be noted that, in some other embodiments, the explosion-proof mark may be disposed on the housing bottom plate 11, or may be disposed on the side plate 12. This is not particularly limited in this application.

It will be understood that the terms "first" and "second" mentioned below are merely intended for a purpose of description, and will not be understood as an indication or implication of relative importance or implicit indication of a quantity of indicated technical features. Therefore, a feature limited by "first", "second" may explicitly or implicitly include one or more features. In the description of the implementations of this application, "a plurality of" means two or more, unless otherwise explicitly and specifically defined.

In the description of this specification, descriptions referring to the terms "an implementation", "some implementations", "exemplary implementations", "examples", "specific examples", or "some examples" mean that specific features, structures, materials, or characteristics described in connection with the implementation or example are included in at least one implementation or example of this application. In this specification, example expressions of the foregoing terms do not necessarily mean the same implementation or example. Furthermore, the specific features, structures, materials, or characteristics may be combined in a proper manner in any one or more of implementations or examples.

It will be understood that the application of this application is not limited to the foregoing examples, and person of ordinary skill in the art may make improvements or alterations according to the foregoing description, and all such improvements and alterations will fall within the protection scope of the claims of this application. Person of ordinary skill in the art will understand that implementing all or part of the processes of the foregoing embodiment and making equivalent changes according to the claims of this application still fall within the scope of this application.

## Claims

1. A battery housing structure (100), comprising:
a housing (10), comprising a housing bottom plate (11), a plurality of side plates (12) that surround a periphery of the housing bottom plate, and a cover plate (13), the housing bottom plate (11) and the plurality of side plates (12) jointly defining an accommodation cavity (121) provided with an opening, an area of the cover plate (13) being greater than an area of each side plate (12), the cover plate (13) being disposed at the opening and configured to close the opening, a surface of the cover plate (13) away from the accommodation cavity (121) being provided with a groove (14) that is concave toward the accommodation cavity (121), and a bottom wall of the groove (14) being provided with a through hole (141) communicating with the accommodation cavity (121); and
a terminal-pole (20), the terminal-pole (20) extending into the accommodation cavity (121) through the through hole (141), and in a thickness direction of the cover plate (13), a height of the groove (14) being H1, a height of the terminal-pole (20) exposed from the bottom wall of the groove (14) in a direction away from the accommodation cavity (121) being H2, and a thickness of the housing (10) being H3, wherein H2 ≤ H1 ≤ 0.6 × H3, and H1, H2 and H3 being measured in a same unit.

2. The battery housing structure (100) according to claim 1, wherein the bottom wall of the groove (14) is provided with a liquid injection hole (142) and a sealing cover (143), the liquid injection hole (142) communicates with the accommodation cavity (121), and the sealing cover (143) is configured to seal the liquid injection hole (142).

3. The battery housing structure (100) according to claim 2, wherein the liquid injection hole (142) is disposed at a middle position of the groove (14) in a width direction of the cover plate (13).

4. The battery housing structure (100) according to claim 2 or 3, wherein in the thickness direction of the cover plate (13), the height of the sealing cover (143) exposed from the bottom wall of the groove in the direction away from the accommodation cavity (121) is H4, wherein H4 ≤ H1, and H1 and H4 are measured in a same unit.

5. The battery housing structure (100) according to any one of claims 1 to 4, wherein the terminal-pole (20) comprises a first terminal-pole (20a) and a second terminal-pole (20b) whose polarities are opposite to each other, the through hole (141) comprises a first through hole (141a) and a second through hole (141b) that are spaced apart, the first terminal-pole (20a) extends into the accommodation cavity (121) through the first through hole (141a), and the second terminal-pole (20b) extends into the accommodation cavity (121) through the second through hole (141b).

6. The battery housing structure (100) according to claim 5, wherein the first terminal-pole (20a) comprises a plurality of first sub-terminal-poles (21a) that are spaced apart, the first through hole (141a) is in a one-to-one correspondence to the first sub-terminal-pole (21a), and the first sub-terminal-pole (21a) extends into the accommodation cavity (121) through the corresponding first through hole (141a); and/or the second terminal-pole (20b) comprises a plurality of second sub-terminal-poles (21b) that are spaced apart, the second through hole (141b) is in a one-to-one correspondence to the second sub-terminal-pole (21b), and the second sub-terminal-pole (21b) extends into the accommodation cavity (121) through the corresponding second through hole (141b).

7. The battery housing structure (100) according to any one of claims 1 to 6, wherein the thickness of the housing (10) is a sum of a thickness of the housing bottom plate (11), a height of the side plate (12), and a thickness of the cover plate (13) in the thickness direction of the cover plate (13).

8. A battery (200), comprising the battery housing structure (100) according to any one of claims 1 to 7 and a jelly roll (201), and the jelly roll (201) being accommodated in the accommodation cavity (121).

9. The battery (200) according to claim 8, wherein a tab (202) further protrudes from the jelly roll (201), and the terminal-pole (20) is electrically connected to the tab (202).

10. The battery (200) according to claim 9, wherein the tab (202) protrudes from a first side wall (2011) of the jelly roll (201), and the first side wall (2011) is a side wall of the jelly roll (201) close to the groove (14) in a length direction of the battery (200).

11. The battery (200) according to claim 9 or 10, wherein an orthographic projection of the tab (202) on the housing bottom plate (11) at least partially overlaps an orthographic projection of the groove (14) on the housing bottom plate (11).

12. The battery (200) according to any one of claims 9 to 11, wherein the battery (200) further comprises a connecting sheet (50), the connecting sheet (50) is connected to a side of the terminal-pole (20) located in the accommodation cavity (121), and the terminal-pole (20) is connected to the tab (202) via the connecting sheet (50).

13. The battery (200) according to claim 12, wherein the terminal-pole (20) comprises the first terminal-pole (20a) and the second terminal-pole (20b) whose polarities are opposite to each other, and the connecting sheet (50) comprises a first connecting sheet (50a) and a second connecting sheet (50b);
the first terminal-pole (20a) comprises the plurality of first sub-terminal-poles (21a), a side of each first sub-terminal-pole (21a) located in the accommodation cavity (121) is connected to one first connecting sheet (50a), and a plurality of first connecting sheets (50a) are of an integrated structure; and/or
the second terminal-pole (20b) comprises the plurality of second sub-terminal-poles (21b), a side of each second sub-terminal-pole (21b) located in the accommodation cavity (121) is connected to one second connecting sheet (50b), and a plurality of second connecting sheets (50b) are of an integrated structure.

14. The battery (200) according to any one of claims 9 to 13, wherein the housing (10) has electrical conductivity, the battery (200) further comprises a first insulating member (30), and the first insulating member (30) is located between the tab (202) and the groove (14).

15. The battery (200) according to claim 14, wherein the battery (200) further comprises a second insulating member (40), and the second insulating member (40) is located between the groove (14) and the terminal-pole (20).

16. The battery (200) according to claim 15, wherein the second insulating member (40) is configured to: separate the terminal-pole (20) from the cover plate (13), and seal a gap between the terminal-pole (20) and the cover plate (13).

17. The battery (200) according to any one of claims 9 to 16, wherein the battery (200) further comprises an insulating gasket (60), and the insulating gasket (60) is located between the tab (202) and the housing bottom plate (11).

18. The battery (200) according to any one of claims 8 to 17, wherein in a thickness direction of the battery (200), a periphery of the cover plate (13) and the periphery of the housing bottom plate (11) are separately fastened to the side plate (12) by soldering.

19. The battery (200) according to any one of claims 8 to 18, wherein an opening of the groove (14) is provided with a fillet (144), there is a gap (145) between a side wall of the side plate (12) and a side wall of the groove (14), and in the length direction of the battery (200), a width of the gap (145) is W1, and an inner radius of the fillet (144) is R1, wherein W1 ≥ R1, and W1 and R1 are measured in a same unit.

20. An electric device (300), comprising the battery housing structure (100) according to any one of claims 1 to 7 or comprising the battery (200) according to any one of claims 8 to 19.
